# EUROPEAN PATENT APPLICATION

(11) **EP 4 657 915 A1**
(43) Date of publication of application: **03.12.2025**
(21) Application number: 24755895.0
(22) Date of filing: 19.01.2024
(51) Int. Cl.: H04W 24/02

(54) **DATA TRANSMISSION METHOD AND APPARATUS, AND STORAGE MEDIUM**

(30) Priority: 15.02.2023 CN 202310164089
(71) Applicant: Huawei Technologies Co., Ltd., Shenzhen, Guangdong 518129 (CN)
(72) Inventor: CHENG, Wenjie, Shenzhen, Guangdong 518129 (CN); ZENG, Yu, Shenzhen, Guangdong 518129 (CN); GENG, Tingting, Shenzhen, Guangdong 518129 (CN)
(74) Representative: Isarpatent
(86) International application number: PCT/CN2024/073165
(87) International publication number: WO 2024/169520

(57) **Abstract**

Embodiments of this application disclose a data transmission method and apparatus, and a storage medium, and pertain to the field of communication technologies. In embodiments of this application, when sending an AI data request to a second network device, a first network device may include event information of a first AI event in the AI data request, where the first AI event is an event that triggers the second network device to send AI data. In this way, when detecting that the first AI event is satisfied, the second network device can send, in a timely manner based on the event information of the first AI event, AI data needed by the first network device, thereby satisfying diversified data requirements of the first network device.

## Description

This application claims priority to Chinese Patent Application No. 202310164089.4, filed with the China National Intellectual Property Administration on February 15, 2023 and entitled "DATA TRANSMISSION METHOD AND APPARATUS, AND STORAGE MEDIUM", which is incorporated herein by reference in its entirety.

### TECHNICAL FIELD

This application relates to the field of communication technologies, and in particular, to a data transmission method and apparatus, and a storage medium.

### BACKGROUND

With improvement of data storage and computing capabilities, artificial intelligence (artificial intelligence, AI) technologies are increasingly used. For example, it is proposed in the 3rd generation partnership project (3rd generation partnership project, 3GPP) that the AI technologies are applied to a wireless communication system, to improve network performance and user experience through intelligent collection and data analysis.

However, in the wireless communication system to which the AI technologies are applied, currently, there is no method for transmitting AI data between network devices. Consequently, the network devices cannot collect, in a timely manner, AI data needed by the network devices.

### SUMMARY

This application provides a data transmission method and apparatus, and a storage medium, so that a network device can collect, in a timely manner, AI data needed by the network device, thereby satisfying diversified data requirements.

To achieve the foregoing objective, the following technical solutions are used in this application.

According to a first aspect, a data transmission method is provided. The method is applied to a first network device, and the method includes: sending an AI data request to a second network device, where the AI data request includes event information of a first AI event, and the first AI event is used to trigger the second network device to send AI data to the first network device; and receiving the AI data.

In this application, when sending the AI data request to the second network device, the first network device may include the event information of the first AI event in the AI data request, where the first AI event is an event that triggers the second network device to send the AI data. In this way, the second network device can send the AI data to the first network device based on the event information of the first AI event when detecting that the first AI event is satisfied. The second network device can return, in a timely manner when triggered by a trigger event specified by the first network device, AI data needed by the first network device, so that diversified data requirements of the first network device are satisfied, and effect of training, inferring, or optimizing an AI model by the first network device can be improved.

In a first possible implementation, the event information of the first AI event includes an event identifier and a configuration parameter of the first AI event. In this way, the second network device may directly return, based on the event identifier and the configuration parameter of the first AI event, the AI data needed by the first network device.

In a second possible implementation, the event information of the first AI event includes an event identifier of the first AI event.

In this implementation, before sending the AI data request to the second network device, the first network device may pre-send an AI event information set to the second network device, to indicate the second network device to store the AI event information set, where the AI event information set includes a configuration parameter and an event identifier of at least one AI event, and the at least one AI event includes the first AI event. In other words, the first network device may preconfigure an event identifier and a corresponding configuration parameter of an AI event in the second network device. In this way, when obtaining the AI data, the first network device includes the event identifier of the first AI event but does not include the configuration parameter in the AI data request. The second network device obtains, based on the event identifier of the first AI event, the configuration parameter of the first AI event from event information of the AI event preconfigured in the second network device, and sends the AI data to the first network device based on the event identifier and the configuration parameter of the first AI event. In this way, signaling overheads of requesting the AI data by the first network device can be reduced.

Optionally, in the first possible implementation or the second possible implementation, the first network device may further send a configuration update request to the second network device, where the configuration update request includes the event identifier and update information of the first AI event, and the configuration update request is used to request the second network device to update the configuration parameter of the first AI event; and receives a configuration update response sent by the second network device for the configuration update request, where the configuration update response indicates that the second network device successfully updates or fails to update the configuration parameter of the first AI event.

In this application, the first network device may update, by using the configuration update request, the configuration parameter of the AI event configured by the first network device in the second network device. In this way, incorrect or unnecessary data transmission caused by a change of the configuration parameter of the AI event can be reduced.

Optionally, the update information in the configuration update request includes at least one configuration parameter and an update operation corresponding to each of the at least one configuration parameter, and the update operation includes one of modification, addition, and deletion.

Optionally, in this application, the first AI event includes a prediction-type trigger event, and the prediction-type trigger event includes a trigger event based on an AI model prediction result of the second network device. For example, the prediction-type trigger event may be an event that the AI model prediction result of the second network device satisfies a specified condition of the first network device.

The prediction-type trigger event includes at least one of the following: A predicted value of a first measurement item is greater than a corresponding first specified threshold, and the predicted value of the first measurement item is less than a corresponding second specified threshold, where the first specified threshold is greater than the second specified threshold.

For example, the first measurement item may be device load, device energy consumption, or terminal traffic.

When the first measurement item is the device load, the prediction-type trigger event may include one or more of the following: A predicted value of the device load is greater than a corresponding first load threshold, and the predicted value of the device load is less than a corresponding second load threshold, where the first load threshold is greater than the second load threshold. In this case, the second network device may return, to the first network device based on the prediction-type trigger event, AI data related to the device load, so that the AI data is used by the first network device to implement an AI use case of load balancing.

When the first measurement item is the device energy consumption, the prediction-type trigger event may include one or more of the following: A predicted value of the device energy consumption is greater than a corresponding first energy consumption threshold, and the predicted value of the device energy consumption is greater than a corresponding second energy consumption threshold, where the first energy consumption threshold is greater than the second energy consumption threshold. In this case, the second network device may return, to the first network device based on the prediction-type trigger event, AI data related to the device energy consumption, so that the AI data is used by the first network device to implement an AI use case of network energy saving.

When the first measurement item is the terminal traffic, the prediction-type trigger event may include one or more of the following: A predicted value of the terminal traffic is greater than a corresponding first traffic threshold, and the predicted value of the terminal traffic is less than a corresponding second traffic threshold, where the first traffic threshold is greater than the second traffic threshold. In this case, the second network device may return, to the first network device based on the prediction-type trigger event, AI data related to a terminal, so that the AI data is used by the first network device to implement an AI use case of mobility optimization. Certainly, the first measurement item may alternatively be another measurement item. Correspondingly, the prediction-type trigger event may alternatively include another event. This is not limited in this application.

Optionally, in this application, the first AI event may alternatively include a current measurement-type trigger event, and the current measurement-type trigger event includes a trigger event based on a current measurement result of the second network device.

The current measurement-type trigger event includes at least one of the following: A current measurement value of a first measurement item is greater than a corresponding third specified threshold, the current measurement value of the first measurement item is less than a corresponding fourth specified threshold, a current measurement value of a second measurement item is different from a predicted value before a current moment, an error rate between a current measurement value of a third measurement item and a predicted value before a current moment is greater than a corresponding fifth specified threshold, and the error rate between the current measurement value of the third measurement item and the predicted value before the current moment is less than a corresponding sixth specified threshold, where the third specified threshold is greater than the fourth specified threshold, and the fifth specified threshold is greater than the sixth specified threshold.

Optionally, the first measurement item includes any one of device load, device energy consumption, and terminal traffic, the second measurement item includes a terminal movement path or a terminal service, and the third measurement item includes any one of device load, device energy consumption, and terminal traffic.

It should be noted that, in this embodiment of this application, when the second measurement item is the terminal movement path or the terminal service, the second network device may return, to the first network device based on the current measurement-type trigger event, AI data related to terminal handover, so that the AI data is used by the first network device to implement an AI use case of mobility optimization.

Optionally, when the first AI event includes the prediction-type trigger event or the current measurement-type trigger event, the configuration parameter of the first AI event includes indication information of a measurement item and/or a specified threshold corresponding to the measurement item, and the configuration parameter of the first AI event further includes duration of the first AI event. The indication information of the measurement item indicates the measurement item. For example, the indication information of the measurement item may be an identifier of the measurement item.

Optionally, in this application, the first AI event may alternatively include a current action-type trigger event, and the current action-type trigger event includes a trigger event based on a current action of the second network device.

The current action-type trigger event may include at least one of the following: A cell is enabled, a terminal is successfully handed over, a terminal is being handed over, and an AI use case is executed.

When the first AI event includes that the cell is enabled, the configuration parameter of the first AI event may include a cell identifier list and duration of the first AI event. The second network device may return, based on the AI event that the cell is enabled, AI data related to a target cell, so that the AI data is used by the first network device to implement an AI use case of mobility optimization, load balancing, or the like, for example, implement AI model-based cell handover.

When the first AI event includes at least one of the following: The terminal is successfully handed over and the terminal is being handed over, the configuration parameter of the first AI event may include a terminal identifier list and duration. The second network device may return, based on the AI event that the terminal is successfully handed over or that the terminal is being handed over, AI data related to terminal handover, so that the AI data is used by the first network device to implement an AI use case of mobility optimization, for example, implement AI model-based terminal handover.

When the first AI event includes that the AI use case is executed, the configuration parameter of the first AI event includes the AI use case and duration. The second network device may return, based on the AI event that the AI use case is executed, AI data related to the executed AI use case, so that the AI data is used by the first network device to implement a corresponding AI use case.

According to a second aspect, a data transmission method is provided. The method is applied to a second network device, and the method includes: receiving an AI data request sent by a first network device, where the AI data request includes event information of a first AI event, and the first AI event is used to trigger the second network device to send AI data to the first network device; and sending the AI data to the first network device based on the event information of the first AI event.

In a first possible implementation, the event information of the first AI event includes an event identifier and a configuration parameter of the first AI event. Correspondingly, an implementation process in which the second network device sends the AI data to the first network device based on the event information of the first AI event may be as follows: The second network device sends the AI data to the first network device based on the event identifier and the configuration parameter of the first AI event.

In a second possible implementation, the event information of the first AI event includes an event identifier of the first AI event. Correspondingly, an implementation process in which the second network device sends the AI data to the first network device based on the event information of the first AI event includes: obtaining a configuration parameter of the first AI event based on the event identifier of the first AI event; and sending the AI data to the first network device based on the event identifier and the configuration parameter of the first AI event.

In this implementation, before receiving the AI data request sent by the first network device, the second network device may further receive an AI event information set sent by the first network device, where the AI event information set includes a configuration parameter and an event identifier of at least one AI event, and the at least one AI event includes the first AI event; and store the AI event information set to complete AI event configuration.

Optionally, in the first possible implementation or the second possible implementation, the second network device may further receive a configuration update request sent by the first network device, where the configuration update request includes the event identifier and the update information of the first AI event; update the configuration parameter of the first AI event based on the event identifier and the update information of the first AI event; and send a configuration update response to the first network device, where the configuration update response indicates that the configuration parameter of the first AI event is successfully updated or fails to be updated. The update information includes at least one configuration parameter and an update operation corresponding to each of the at least one configuration parameter, and the update operation includes one of modification, addition, and deletion. Configured event information of an AI event is updated through interaction with the first network device, so that incorrect or unnecessary AI data transmission caused by a change of a configuration parameter of the AI event is avoided.

Optionally, in this application, the first AI event includes a prediction-type trigger event, and the prediction-type trigger event includes a trigger event based on an AI model prediction result of the second network device.

The prediction-type trigger event includes at least one of the following: A predicted value of a first measurement item is greater than a corresponding first specified threshold, and the predicted value of the first measurement item is less than a corresponding second specified threshold, where the first specified threshold is greater than the second specified threshold. The first measurement item may be any one of device load, device energy consumption, and terminal traffic.

Optionally, in this application, the first AI event includes a current measurement-type trigger event, and the current measurement-type trigger event includes a trigger event based on a current measurement result of the second network device.

The current measurement-type trigger event includes at least one of the following: A current measurement value of a first measurement item is greater than a corresponding third specified threshold, the current measurement value of the first measurement item is less than a corresponding fourth specified threshold, a current measurement value of a second measurement item is different from a predicted value before a current moment, an error rate between a current measurement value of a third measurement item and a predicted value before a current moment is greater than a corresponding fifth specified threshold, and the error rate between the current measurement value of the third measurement item and the predicted value before the current moment is less than a corresponding sixth specified threshold, where the third specified threshold is greater than the fourth specified threshold, and the fifth specified threshold is greater than the sixth specified threshold.

The first measurement item includes any one of device load, device energy consumption, and terminal traffic, the second measurement item includes a terminal movement path or a terminal service, and the third measurement item includes any one of device load, device energy consumption, and terminal traffic.

Optionally, when the first AI event includes the prediction-type trigger event or the current measurement-type trigger event, the configuration parameter of the first AI event includes indication information of a measurement item and/or a specified threshold corresponding to the measurement item, and the configuration parameter of the first AI event further includes duration of the first AI event. In this case, an implementation process in which the second network device sends the AI data to the first network device based on the event identifier and the configuration parameter of the first AI event may include: detecting the first AI event based on the event identifier of the first AI event, the indication information of the measurement item, and/or the specified threshold corresponding to the measurement item; and sending the AI data to the first network device when the first AI event is continuously detected within the duration.

Optionally, in this application, the first AI event includes a current action-type trigger event, and the current action-type trigger event includes a trigger event based on a current action of the second network device.

The current action-type trigger event includes at least one of the following: A cell is enabled, a terminal is successfully handed over, a terminal is being handed over, and an AI use case is executed.

When the first AI event includes that the cell is enabled, the configuration parameter of the first AI event includes a cell identifier list and duration of the first AI event. An implementation process of sending the AI data to the first network device based on the event identifier and the configuration parameter of the first AI event may include: detecting an enabled/disabled state of a target cell based on the event identifier of the first AI event, where a cell identifier of the target cell is any cell identifier in the cell identifier list; and sending the AI data to the first network device when it is detected that the target cell is in the enabled state within the duration.

When the first AI event includes that the terminal is successfully handed over, the configuration parameter of the first AI event includes a terminal identifier list and duration of the first AI event. An implementation process of sending the AI data to the first network device based on the event identifier and the configuration parameter of the first AI event may include: detecting a camped state of a target terminal based on the event identifier of the first AI event, where an identifier of the target terminal is any identifier in the terminal identifier list, and the target terminal is a terminal handed over to the second network device; and sending the AI data to the first network device when it is detected that the target terminal continuously camps on the second network device within the duration.

When the first AI event includes that the AI use case is executed, the configuration parameter of the first AI event includes the AI use case and duration of the first AI event. An implementation process of sending the AI data to the first network device based on the event identifier and the configuration parameter of the first AI event may include: detecting, based on the event identifier of the first AI event, a status of executing the AI use case by the second network device; and sending the AI data to the first network device when it is detected that the second network device executes the AI use case within the duration.

According to a third aspect, a data transmission apparatus is provided. The data transmission apparatus includes at least one module, and the at least one module is configured to perform the data transmission method according to the first aspect or the second aspect.

According to a fourth aspect, a data transmission apparatus is provided. The data transmission apparatus includes a processor, and the processor is configured to execute at least one program instruction or code stored in a memory, to implement the data transmission method according to the first aspect or the second aspect.

The data transmission apparatus according to the third aspect or the fourth aspect may be a network device, or an apparatus used in the network device, for example, a chip, or an apparatus configured to implement some functions of the network device.

According to a fifth aspect, a data transmission system is provided. The data transmission system includes a first network device and a second network device, the first network device is configured to perform the data transmission method according to the first aspect, and the second network device is configured to perform the data transmission method according to the second aspect.

According to a sixth aspect, a computer-readable storage medium is provided. The computer-readable storage medium stores instructions; and when the instructions are run on a network device, the network device is enabled to perform the data transmission method according to the first aspect or the second aspect.

According to a seventh aspect, a computer program product including instructions is provided. When the computer program product runs on a computer, the computer is enabled to perform the data transmission method according to the first aspect or the second aspect.

Technical effects obtained in the second aspect to the seventh aspect are similar to technical effects obtained by corresponding technical means in the first aspect. Details are not described herein again.

### BRIEF DESCRIPTION OF DRAWINGS

FIG. 1 is a diagram of a system architecture related to a data transmission method according to an embodiment of this application;
FIG. 2 is a diagram of a structure of a base station in an architecture in which a central unit and a distributed unit are separated according to an embodiment of this application;
FIG. 3 is a diagram of a structure of a data transmission apparatus according to an embodiment of this application;
FIG. 4 is a flowchart of a data transmission method according to an embodiment of this application;
FIG. 5 is a flowchart of another data transmission method according to an embodiment of this application;
FIG. 6 is a flowchart of still another data transmission method according to an embodiment of this application;
FIG. 7 is a diagram of a structure of another data transmission apparatus according to an embodiment of this application; and
FIG. 8 is a diagram of a structure of still another data transmission apparatus according to an embodiment of this application.

### DESCRIPTION OF EMBODIMENTS

To make objectives, technical solutions, and advantages of embodiments of this application clearer, the following further describes implementations of this application in detail with reference to the accompanying drawings.

Before embodiments of this application are described in detail, an application scenario in embodiments of this application is first described.

In a wireless communication system to which an AI technology is applied, a first network device may collect running data of an access network device, a core network device, a terminal, or another management device, to train an AI model. The trained AI model can perform prediction based on running data of a second network device, and then perform policy adjustment on the second network device based on a prediction result. Subsequently, the first network device may obtain adjusted AI data of the second network device, to continue to optimize the AI model.

For example, in a first possible application scenario, the AI technology may be used to implement network energy saving. For example, in this scenario, a first network device may collect data from a RAN, to train an AI model. Then, energy efficiency and a load status of a second network device in the RAN are predicted by using the trained AI model, and an energy saving policy of the second network device is configured based on the predicted energy efficiency and load status, to maintain balance between network performance and energy efficiency while reducing energy consumption. Subsequently, the second network device for which the energy saving policy is configured may feed back data to the first network device, to optimize the AI model.

In a second possible application scenario, the AI technology may be used to implement network load balancing. For example, a first network device may collect measurement data, feedback data, historical data, and the like of a network device such as a terminal or a base station, to train an AI model. Cell load of a second network device is predicted by using the trained AI model, and a terminal handover procedure or a handover parameter is optimized based on the predicted cell load, to improve load balancing performance and improve user experience. Subsequently, the second network device may feed back data to the first network device, to optimize the AI model.

In a third possible application scenario, the AI technology may be used to implement mobility optimization. For example, a first network device collects terminal data from a RAN, to train an AI model. A moving path of a terminal is predicted by using the trained AI model, and a radio resource management action is performed based on the predicted moving path of the terminal, for example, a target cell to be handed over to is selected. In this way, a second network device corresponding to the subsequently selected target cell may feed back data to the first network device, to optimize the AI model.

The foregoing application scenarios are several possible application scenarios in which the AI technology shown in embodiments of this application is applied to NR. Apparently, in the NR, the AI technology may be further used to implement other network optimization. The data transmission method provided in embodiments of this application may be used to implement AI data transmission between network devices in the NR to which the AI technology is applied. The AI data is data that is collected by the network device in the foregoing various scenarios and that is used for AI model training, inference, and optimization.

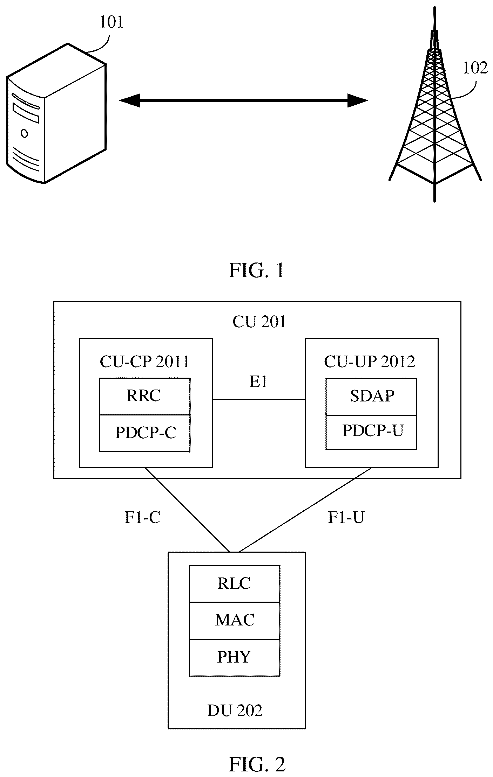

FIG. 1 is a diagram of a system architecture related to a data transmission method according to an embodiment of this application. As shown in FIG. 1, the system architecture includes a first network device 101 and a second network device 102. A communication connection is established between the first network device 101 and the second network device 102.

The system architecture is applicable to a plurality of communication networks, for example, a 5th generation (5th generation, 5G) mobile communication system such as a long term evolution (long term evolution, LTE) network, an enhanced long term evolution (enhanced long term evolution, eLTE) network, or a new radio (new radio, NR) network, or may be a 6th generation (6th generation, 6G) communication system or another future-oriented communication system. In addition, the communication system provided in this application may be used in a terrestrial network (terrestrial network, TN) and/or a non-terrestrial network (non-terrestrial network, NTN). This is not limited.

The first network device 101 may collect AI data from the second network device 102, and perform AI model training, inference, or optimization by using the collected AI data. For example, the first network device 101 may send an AI data request to the second network device 102, where the AI data request includes event information of a first AI event. The first AI event is used to trigger the second network device to send the AI data to the first network device. After receiving the AI data request, the second network device 102 sends the AI data to the first network device based on the event information of the first AI event.

In a possible implementation, an AI model may be deployed on the first network device 101. In this case, the first network device 101 may send the AI data request to the second network device 102 when the AI model of the first network device 101 needs training data, inference data, or optimization data. After receiving the AI data request, the second network device 102 may detect the first AI event based on the event information of the first AI event in the AI data request. The AI data needed by the first network device is returned to the first network device 101 when it is detected that the first AI event is satisfied.

Optionally, an AI model may also be deployed on the second network device 102. In this case, the second network device 102 may detect the first AI event based on a prediction result of the AI model deployed on the second network device 102.

In an example, the first network device 101 or the second network device 102 may be an access network device in a radio access network (radio access network, RAN). In this application, the access network device may be various types of base stations, for example, an evolved NodeB (evolved NodeB, eNodeB), a transmission reception point (transmission reception point, TRP), a next generation NodeB (next generation NodeB, gNB), or another base station in a future-oriented communication system. In addition, when the eNB is connected to a 5G core network (5G Core network, 5GC), an LTE eNB may also be referred to as an eLTE eNB, and the eLTE eNB may also be considered as a base station device in an NR system; and the access network device may alternatively be a device such as a wireless relay node or a wireless backhaul node. The base station may be a macro base station, or may be a micro base station, an indoor base station, or the like. The access network device may alternatively be a module or unit that completes some functions of the base station. For example, the access network device may further include a central unit (central unit, CU) and/or a distributed unit (distributed unit, DU). For example, the first network device 101 or the second network device 102 may be a base station in an architecture in which a central unit (CU) and a distributed unit (DU) are separated. For example, FIG. 2 is a diagram of a structure of a base station in a CU-DU separated architecture. As shown in FIG. 2, the base station includes a CU 201 and a DU 202.

The CU 201 includes a central unit-control plane (central unit-control plane, CU-CP) 2011 and a central unit-user plane (central unit-user plane CU-UP) 2012. The CU-CP 2011 and the CU-UP 2012 communicate with each other through an E1 interface. The CU-CP 2011 is configured to implement RRC and a control plane packet data convergence protocol (packet data convergence protocol-control, PDCP-C) function. The CU-UP 2012 is configured to implement a service data adaptation protocol (service data adaptation protocol, SDAP) function and a user plane packet data convergence protocol (packet data convergence protocol-user, PDCP-U) function.

The DU 202 may communicate with the CU-CP 2011 through an F1-C interface, and communicate with the CU-UP 2012 through an F1-U interface. The DU 202 is configured to implement radio link control (radio link control, RLC), medium access control (medium access control, MAC), and physical (physical, PHY) layer function.

In different systems, the CU (including the CU-CP and the CU-UP) or the DU may also have different names, but a person skilled in the art may understand meanings thereof. For example, in an open radio access network (open radio access network, O-RAN) system, a CU may also be referred to as an O-CU (open CU), a DU may also be referred to as an O-DU, a CU-CP may also be referred to as an O-CU-CP, and a CU-UP may also be referred to as an O-CU-UP. For ease of description, the CU, the CU-CP, the CU-UP, and the DU are used as examples for description in this application. It should be noted that an O-RAN is an intelligent and open access network, and an O-RAN architecture integrates a modular base station software stack on current hardware, allowing baseband and radio unit components from discrete vendors to seamlessly run together. The O-RAN architecture mainly features separation of software and hardware, and implements network function virtualization and hardware standardization.

In an example, the first network device 101 or the second network device 102 may alternatively be a terminal. In this application, the terminal may be one of various devices that provide voice and/or data connectivity for a user, and may communicate with one or more core networks through a radio access network (Radio Access Network, RAN). The terminal may also be referred to as a terminal device, user equipment (user equipment, UE), a mobile station, a mobile terminal, or the like. The terminal may be used in various communication scenarios, for example, device-to-device (device-to-device, D2D) communication, vehicle to everything (vehicle to everything, V2X) communication, machine-type communication (machine-type communication, MTC), the internet of things (internet of things, IOT), virtual reality (virtual reality, VR), augmented reality (augmented reality, AR), industrial control (industrial control), self driving (self driving), telemedicine (telemedicine), smart grid (smart grid), smart furniture, smart office, smart wear, smart transportation, or smart city (smart city). The terminal device may be a mobile phone (mobile phone), a tablet computer (pad), a computer with a wireless transceiver function, a wearable device, an aerospace device, an uncrewed aerial vehicle device, or the like. A chip used in the foregoing device may also be referred to as a terminal.

In an example, the first network device 101 or the second network device 102 may alternatively be a network device with an AI function, such as a core network device or an operation, administration, and maintenance (operation, administration, and maintenance, OAM) device. This is not specifically limited in embodiments of this application. The core network device may include one or more core network elements. A 5G core network is used as an example. The 5G core network includes an access and mobility management function (access and mobility management function, AMF) network element responsible for mobility management, access management, and other services, a session management function (session management function, SMF) network element responsible for session management, a user plane function (user plane function, UPF) network element responsible for data packet routing and forwarding and quality of service (quality of service, QoS) control of a user plane, a policy control function (policy control function, PCF) network element, and the like. The core network elements may work independently, or may be combined together to implement some control functions. For example, the AMF, the SMF, and the PCF may be combined together to serve as a core network device.

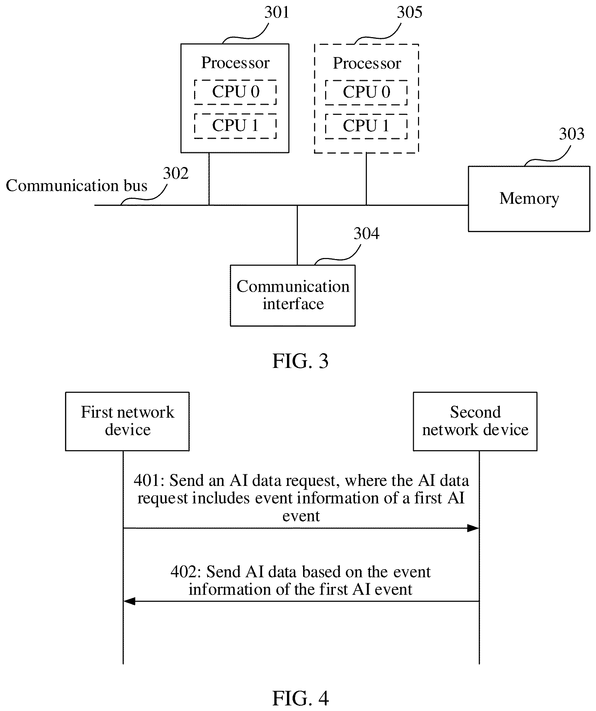

FIG. 3 is a diagram of a structure of a data transmission apparatus according to an embodiment of this application.

The data transmission apparatus may be a network device, or an apparatus used in the network device, for example, a chip, or an apparatus used to implement some functions of the network device, for example, an apparatus such as a CU or a DU in a separated base station. The network device in this application may be an access network device, a terminal, or a core network device.

As shown in FIG. 3, the data transmission apparatus may include at least one processor 301, a communication bus 302, a memory 303, and at least one communication interface 304. It should be noted that the device structure shown in FIG. 3 constitutes no limitation on the data transmission apparatus. The data transmission apparatus may include more or fewer components than those shown in the figure, or combine some components, or have different component arrangements. This is not limited in embodiments of this application. With reference to FIG. 3, the following describes components of the data transmission apparatus in detail.

The processor 301 is a control center of the data transmission apparatus, and may be one processor, or may be an umbrella term of a plurality of processing elements. For example, the processor 301 may be a general-purpose central processing unit (Central Processing Unit, CPU), an application-specific integrated circuit (application-specific integrated circuit, ASIC), or one or more integrated circuits configured to control program execution of a solution in this application, for example, one or more microprocessors (digital signal processors, DSP) or one or more field programmable gate arrays (field programmable gate arrays, FPGA). The processor 301 may perform various functions of the data transmission apparatus by running or executing a software program stored in the memory 303 and invoking data stored in the memory 303. For example, in embodiments shown in FIG. 4 to FIG. 6, actions of a first network device or a second network device may be performed by invoking data in a memory by a corresponding processor.

In an embodiment, the processor 301 may include one or more CPUs, for example, a CPU 0 and a CPU 1 in FIG. 3.

In an embodiment, the data transmission apparatus may include a plurality of processors, for example, a processor 301 and a processor 305 shown in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

The communication bus 302 may include a channel for transferring information between the foregoing components. The communication bus 302 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line represents the bus in FIG. 3, but this does not mean that there is only one bus or only one type of bus.

The memory 303 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, the memory is not limited thereto. The memory 303 may exist independently, and is connected to the processor 301 through the communication bus 302. Alternatively, the memory 303 may be integrated with the processor 301. The memory 303 is configured to store a software program for executing the solutions provided in embodiments of this application, and the processor 301 controls execution of the software program.

The communication interface 304 is configured to communicate with another device or a communication network, for example, an Ethernet, a RAN, or a wireless local area network (wireless local area network, WLAN). The communication interface 304 may include a receiving unit to implement a receiving function, and a sending unit to implement a sending function.

When the data transmission apparatus is a network device, the network device may be a general-purpose network device or a dedicated network device, for example, may be a desktop computer, a portable computer, or a network server. This is not limited in embodiments of this application.

In the following, the data transmission method provided in embodiments of this application is described in detail. It may be understood that the method provided in this application may be performed by a network device, or may be performed by a module (for example, a chip) used in the network device. The following describes the data transmission method provided in this application by using network devices (a first network device and a second network device) as execution bodies.

FIG. 4 is a flowchart of a data transmission method according to an embodiment of this application; As shown in FIG. 4, the method includes the following steps.

Step 401: A first network device sends an AI data request to a second network device, where the AI data request includes event information of a first AI event.

The first network device and the second network device are applicable to the system architecture shown in FIG. 1. For example, both the first network device and the second network device are access network devices; or the first network device is an access network device, and the second network device is a core network device or a terminal; or the first network device is a core network device, and the second network device is an access network device. This is not limited in this embodiment of this application.

In this embodiment of this application, data used for AI model training, inference, optimization, or the like and related to various operations of AI model application may be collectively referred to as AI data. For example, corresponding to different operations, the AI data may be classified into training data corresponding to AI model training, inference data corresponding to AI model inference, and feedback data corresponding to AI model optimization. When the first network device needs to obtain training data to train an AI model, when the first network device needs to obtain inference data to perform inference by using the AI model, or when the first network device needs to obtain feedback data of the second network device to optimize the AI model, the first network device may send the AI data request to the second network device, to request the needed AI data.

The AI data request may carry the event information of the first AI event. The first AI event is an event that triggers the second network device to send the AI data. In addition, the first AI event may be associated with an AI use case (use case) executed by the first network device. The AI use case is an item for adjusting a policy by applying an inference result of the AI model. For example, the AI use case may include at least one of network energy saving, load balancing, and mobility optimization described in the foregoing application scenarios.

In some implementations, the first AI event may include a prediction-type trigger event. The prediction-type trigger event is a trigger event based on an AI model prediction result of the second network device. For example, the prediction-type trigger event may be an event that the AI model prediction result of the second network device satisfied a specified condition of the first network device.

For example, the prediction-type trigger event may include at least one of the following: A predicted value of a first measurement item is greater than a corresponding first specified threshold, and the predicted value of the first measurement item is less than a corresponding second specified threshold, where the first specified threshold is greater than the second specified threshold, where the first measurement item refers to an object that is specified by the first network device and that is actually measured by the second network device.

For example, the first measurement item includes device load. Correspondingly, the prediction-type trigger event may include: A predicted value of the device load is greater than a corresponding first load threshold, and/or the predicted value of the device load is less than a corresponding second load threshold, where the first load threshold is greater than the second load threshold. For another example, the first measurement item includes device energy consumption. Correspondingly, the prediction-type trigger event may include: A predicted value of the device energy consumption is greater than a corresponding first energy consumption threshold, and/or the predicted value of the device energy consumption is greater than a corresponding second energy consumption threshold, where the first energy consumption threshold is greater than the second energy consumption threshold. For another example, the first measurement item includes terminal traffic. Correspondingly, the prediction-type trigger event may include: A predicted value of the terminal traffic is greater than a corresponding first traffic threshold, and the predicted value of the terminal traffic is less than a corresponding second traffic threshold, where the first traffic threshold is greater than the second traffic threshold. Certainly, the first measurement item may alternatively be another measurement item. Correspondingly, the prediction-type trigger event may alternatively include another event. This is not limited in this embodiment of this application.

In some implementations, the first AI event may alternatively include a current measurement-type trigger event, and the current measurement-type trigger event is a trigger event based on a current measurement result of the second network device. For example, the current measurement-type trigger event may mean that a current measurement value of the second network device satisfies a specified condition of the first network device.

For example, the current measurement-type trigger event may include at least one of the following: A current measurement value of a first measurement item is greater than a corresponding third specified threshold, the current measurement value of the first measurement item is less than a corresponding fourth specified threshold, a current measurement value of a second measurement item is different from a predicted value before a current moment, an error rate between a current measurement value of a third measurement item and a predicted value before a current moment is greater than a corresponding fifth specified threshold, and the error rate between the current measurement value of the third measurement item and the predicted value before the current moment is less than a corresponding sixth specified threshold, where the third specified threshold is greater than the fourth specified threshold, and the fifth specified threshold is greater than the sixth specified threshold.

The predicted value of the measurement item before the current moment may be a value that is at the current moment and that is obtained through prediction before the current moment. For example, assuming that the current moment is T1, the predicted value before the current moment may be a value that is at the moment T1 and that is obtained through prediction at a moment T2, where the moment T2 is earlier than the moment T1.

In addition, the first measurement item may include any one of device load, device energy consumption, and terminal traffic, the second measurement item may include a terminal movement path or a terminal service, and the third measurement item may include any one of device load, device energy consumption, and terminal traffic.

For example, the first measurement item may include the device load. Correspondingly, the current measurement-type trigger event may include: A current measurement value of the device load is greater than a corresponding third load threshold, and/or the current measurement value of the device load is less than a corresponding fourth load threshold, where the third load threshold is greater than the fourth load threshold. For another example, the first measurement item may include the device energy consumption. Correspondingly, the current measurement-type trigger event may include: A current measurement value of the device energy consumption is greater than a corresponding third energy consumption threshold, and/or the current measurement value of the device energy consumption is less than a corresponding fourth energy consumption threshold, where the third energy consumption threshold is greater than the fourth energy consumption threshold. For another example, the second measurement item includes the terminal movement path. Correspondingly, the current measurement-type trigger event may include: A current measurement value of the terminal movement path is different from a predicted value of the terminal movement path before a current moment. For another example, the second measurement item includes the terminal service. Correspondingly, the current measurement-type trigger event may include: A current measurement value of the terminal service is different from a predicted value of the terminal service before a current moment. For another example, the third measurement item may include the terminal traffic. Correspondingly, the current measurement-type trigger event may include: An error rate between a current measurement value of the terminal traffic and a predicted value before a current moment is greater than a corresponding fifth specified threshold, and/or the error rate between the current measurement value of the terminal and the predicted value before the current moment is less than a corresponding sixth specified threshold, where the fifth specified threshold is greater than the sixth specified threshold.

In some implementations, the first AI event may alternatively include a current action-type trigger event, and the current action-type trigger event is a trigger event based on a current action of the second network device. For example, the current action-type trigger event may be an event that the current action of the second network device satisfies a specified condition of the first network device.

For example, the current action-type trigger event may include one or more of the following: A cell is enabled, a terminal is successfully handed over, a terminal is being handover, and an AI use case is executed.

In a possible implementation, the event information of the first AI event in the AI data request may include an event identifier and a configuration parameter of the first AI event, the event identifier identifies an AI event, and the configuration parameter is used to configure a parameter needed for detecting a corresponding event. In the following several case examples, configuration parameters of AI events may vary based on different AI events.

In a first case, the first AI event includes any event in the foregoing prediction-type trigger event.

In this case, the configuration parameter of the first AI event may include a specified threshold corresponding to a measurement item and duration of the first AI event. The duration of the first AI event is duration that is required by the first network device and in which the second network device detects the first AI event. In this embodiment of this application, the duration of the first AI event is also referred to as time to trigger.

Optionally, the configuration parameter of the first AI event further includes prediction accuracy corresponding to the measurement item, and the prediction accuracy is prediction accuracy that the second network device needs to satisfy for a predicted value of a corresponding measurement item. The prediction accuracy may be accuracy (accuracy), precision (precision), recall (recall), or the like. The accuracy is a ratio of a number of samples correctly predicted by an AI model to a total number of samples in a sample set, and represents a specific number of samples correctly predicted by the AI model in the sample set. The precision is a ratio of a number of positive samples correctly predicted by the AI model to a number of all positive samples predicted by the AI model, and represents a specific number of samples correctly predicted in the positive samples predicted by the AI model. The recall is a ratio of a number of positive samples correctly predicted by the AI model to a number of positive samples included in the sample set, and indicates a specific number of samples correctly predicted in the positive samples included in the sample set.

Optionally, the configuration parameter of the first AI event may further include a hysteresis parameter, and the hysteresis parameter indicates an allowed hysteresis range of the predicted value of the measurement item. For example, when the hysteresis parameter is a, and the specified threshold corresponding to the measurement item is b, the allowed hysteresis range of the predicted value of the measurement item is (b - a, b + a). When detecting that the predicted value of the measurement item is within the hysteresis range, the second network device may determine that the first AI event is detected.

For example, when the first AI event includes that the predicted value of the device load is greater than the corresponding first load threshold, the configuration parameter of the first AI event may include the first load threshold corresponding to the device load, the time to trigger, the hysteresis parameter, and the prediction accuracy.

The device load may be represented by using different load sub-items. Therefore, the configuration parameter of the first AI event may include load thresholds corresponding to the different load sub-items. For example, the device load may be represented by one or more load sub-items of a throughput, physical resource block (physical resource block, PRB) usage, a number of active terminals, a number of radio resource control (radio resource control, RRC) connections, a composite available capacity group, a transport network layer (transport network layer, TNL) capacity indicator, and a slice available capacity. Correspondingly, the configuration parameter of the first AI event may include load thresholds of the foregoing one or more load sub-items. The number of active terminals is a number of terminals in an active state.

When the configuration parameter of the first AI event includes the load thresholds of the foregoing plurality of load sub-items, assuming that an event identifier of the AI event that the predicted value of the device load is greater than the corresponding first load threshold is AI Event A1, the event information, of the first AI event, carried in the AI data request may be an example in Table 1.

**Table 1 Event information of the first AI event**

| Information element name | | | Information element description |
|---|---|---|---|
| >AI Event A1 | | | Event identifier of the first AI event |
| | >>CHOICE load Threshold | | Load threshold of the load sub-item |
| | | >>>Threshold throughput | Throughput threshold |
| | | >>>Threshold PRB usage | PRB usage threshold |
| | | >>>Threshold number of active UEs | Threshold of a number of active terminals |
| | | >>>Threshold number of RRC connections | Threshold of a number of RRC connections |
| | | >>>Threshold composite available capacity group | Composite available capacity group threshold |
| | | >>>Threshold TNL capacity indicator | TNL capacity indicator threshold |
| | | >>>Threshold slice available capacity | Slice available capacity threshold |
| | >>Prediction accuracy | | Prediction accuracy |
| | > > Hysteresis | | Hysteresis parameter |
| | >>Time to trigger | | Time to trigger |

Symbols ">", ">>", and ">>>" in Table 1 represent levels of the information elements. For example, ">" represents a first-level information element, ">>" represents a second-level information element, ">>>" represents a third-level information element, and so on. Information elements of various levels have a nesting relationship based on the levels. For example, the second-level information element is included in the first-level information element, and the third-level information element is included in the second-level information element. It may be understood that both the second-level information element and the third-level information element are included in the first-level information element. If the foregoing symbols such as ">" appear in examples of information element designs in this application, meanings of the symbols are the same as those in Table 1. Details are not described again.

In a second case, the first AI event includes the foregoing current measurement-type trigger event.

In this case, the configuration parameter of the first AI event may include a specified threshold corresponding to a measurement item and/or the measurement item, and the configuration parameter of the first AI event further includes time to trigger.

For example, when the first AI event includes any one or more current measurement-type trigger events corresponding to the first measurement item or the third measurement item, the configuration parameter of the first AI event may include a specified threshold corresponding to the first measurement item or the third measurement item and the time to trigger.

Optionally, the configuration parameter of the first AI event further includes a hysteresis parameter. For related descriptions of the hysteresis parameter, refer to related descriptions in the foregoing first case. Details are not described again.

Optionally, when the measurement item of the first AI event relates to a device other than the second network device, for example, relates to a terminal, the configuration parameter of the first AI event may further include an identifier of a measurement object, and the measurement object is an object to be measured by the second network device.

For example, when the first AI event includes that the current measurement value of the device load is greater than the corresponding third load threshold, the configuration parameter of the first AI event may include the third load threshold corresponding to the device load, the time to trigger, and the hysteresis parameter. The device load may include one or more load sub-items described in the first case above. Correspondingly, the configuration parameter of the first AI event may include load thresholds of the one or more load sub-items.

When the configuration parameter of the first AI event includes the load thresholds of the plurality of load sub-items, assuming that an event identifier of the AI event that the current measurement value of the device load is greater than the corresponding third load threshold is AI Event B1, the event information, of the first AI event, carried in the AI data request may be an example in Table 2.

**Table 2 Event information of the first AI event**

| Information element name | | | Information element description |
|---|---|---|---|
| >AI Event B1 | | | Event identifier of the first AI event |
| | >>CHOICE load Threshold | | Load threshold of the load sub-item |
| | | >>>Threshold throughput | Throughput threshold |
| | | >>>Threshold PRB usage | PRB usage threshold |
| | | >>>Threshold number of active UEs | Threshold of a number of active terminals |
| | | >>>Threshold number of RRC connections | Threshold of a number of RRC connections |
| | | >>>Threshold composite available capacity group | Composite available capacity group threshold |
| | | >>>Threshold TNL capacity indicator | TNL capacity indicator threshold |
| | | >>>Threshold slice available capacity | Slice available capacity threshold |
| | | >>Prediction accuracy | Prediction accuracy |
| | | > > Hysteresis | Hysteresis parameter |
| | | >>Time to trigger | Time to trigger |

For another example, when the first AI event includes that the error rate between the current measurement value of the terminal traffic and the predicted value before the current moment is greater than the corresponding fifth specified threshold, the configuration parameter of the first AI event may include a terminal identifier list, the fifth specified threshold, the time to trigger, and the hysteresis parameter. The terminal identifier list includes at least one terminal identifier, and the at least one terminal identifier indicates a terminal on which measurement is to be performed, to be specific, the terminal identified by the at least one terminal identifier is a measurement object corresponding to the terminal traffic.

The terminal traffic may include at least one of uplink traffic and downlink traffic. Based on this, the fifth specified threshold may include at least one of an uplink traffic threshold and a downlink traffic threshold. In addition, the error rate between the current measurement value of the terminal traffic and the predicted value before the current moment may be equal to (the current measurement value - the predicted value before the current moment)/the predicted value before the current moment, or may be equal to (current measurement value - predicted value before the current moment)/current measurement value.

When the configuration parameter of the first AI event includes the uplink traffic threshold and the downlink traffic threshold, assuming that an event identifier of the AI event that the error rate between the current measurement value of the terminal traffic and the predicted value before the current moment is greater than the corresponding fifth specified threshold is AI Event C3, the event information, of the first AI event, carried in the AI data request may be an example in Table 3.

**Table 3 Event information of the first AI event**

| Information element name | | | Information element description |
|---|---|---|---|
| >AI Event C3 | | | Event identifier of the first AI event |
| | >>UE ID List | | Terminal identifier list |
| | >>CHOICE Traffic Error Threshold | | Traffic error threshold |
| | | >>>Threshold UL throughput traffic error | Uplink traffic error threshold |
| | | >>>Threshold DL throughput traffic error | Downlink traffic error threshold |
| | > > Hysteresis | | Hysteresis parameter |
| | >>Time to trigger | | Time to trigger |

In some other implementations, when the first AI event includes that the current measurement value of the second measurement item in the current measurement-type trigger event is different from the predicted value before the current moment, the configuration parameter of the first AI event may include indication information of the measurement item and the time to trigger.

Optionally, if the measurement item of the first AI event relates to a device other than the second network device, for example, relates to a terminal, the configuration parameter of the first AI event may further include an identifier of a measurement object, and the measurement object is an object to be measured by the second network device.

For example, when the current measurement value of the terminal service included in the first AI event is different from the predicted value before the current moment, the configuration parameter of the first AI event may include a terminal identifier list, a service type identifier, and the time to trigger. The terminal identifier list includes at least one terminal identifier, and the at least one terminal identifier indicates a terminal on which measurement is to be performed, namely, a measurement object. The service type identifier indicates a to-be-measured service, to be specific, the service type identifier is the indication information of the measurement item.

There may be a plurality of terminal service types, for example, a conversational voice, real-time gaming, process automation monitoring, a mission-critical service video user plane, low-latency enhanced mobile broadband (enhanced mobile broadband, eMBB) application augmented reality, and an intelligent transport system. Based on this, the configuration parameter of the first AI event may include identifiers of the foregoing one or more service types.

When the configuration parameter of the first AI event includes the identifiers of the foregoing plurality of service types, assuming that an event identifier of the AI event that the current measurement value of the terminal service is different from the predicted value before the current moment is AI Event C2, the event information, of the first AI event, carried in the AI data request may be an example in Table 4.

**Table 4 Event information of the first AI event**

| Information element name | | | Information element description |
|---|---|---|---|
| >AI Event C2 | | | Event identifier of the first AI event |
| | >>UE ID List | | Terminal identifier list |
| | >>CHOICE Service | | Service type |
| | | >>>Conversational Voice | Conversational voice |
| | | >>>Real Time Gaming | Real-time gaming |
| | | >>>Process automation monitoring | Process automation monitoring |
| | | >>>Mission Critical Video user plane | Mission-critical service video user plane |
| | | >>>Low Latency eMBB applications Augmented Reality | Low-latency eMBB application augmented reality |
| | | >>>Intelligent transport systems | Intelligent transport system |
| | >>Time to trigger | | Time to trigger |

In a third case, the first AI event includes the foregoing current action-type trigger event.

For example, when the first AI event includes that the cell is enabled, the configuration parameter of the first AI event may include a cell identifier list and time to trigger. The cell identifier list includes at least one cell identifier, and the at least one cell identifier indicates a cell on which measurement is to be performed, to be specific, the at least one cell identifier indicates a cell to be measured by the second network device. In other words, the second network device may detect the first AI event by detecting an enabled/disabled state of the cell identified by the at least one cell identifier.

When the first AI event includes at least one of the following: The terminal is successfully handed over and the terminal is being handed over, the configuration parameter of the first AI event includes a terminal identifier list and time to trigger. The terminal identifier list includes at least one terminal identifier, and the at least one terminal identifier indicates a terminal on which measurement is to be performed. In other words, the at least one terminal identifier indicates the terminal to be measured by the second network device. The second network device may detect the first AI event by detecting a handover state of the terminal identified by the at least one terminal identifier.

For example, when the first AI event includes that the terminal is successfully handed over, assuming that an event identifier of the AI event that the terminal is successfully handed over is AI Event E1, the event information, of the first AI event, included in the AI data request may be an example in Table 5.

**Table 5 Event information of the first AI event**

| Information element name | | Information element description |
|---|---|---|
| >AI Event E1 | | Event identifier of the first AI event |
| | >>UE ID List | Terminal identifier list |
| | >>Time to trigger | Time to trigger |

When the first AI event includes that the AI use case is executed, the configuration parameter of the first AI event may include the AI use case and time to trigger. The AI use case may include at least one of network energy saving, load balancing, and mobility optimization described in the foregoing application scenarios.

For example, when the configuration parameter of the first AI event includes the foregoing plurality of AI use cases, assuming that an event identifier of the AI event that the AI use case is executed is AI Event F1, the event information, of the first AI event, carried in the AI data request may be an example in Table 6.

**Table 6 Event information of the first AI event**

| Information element name | | | Information element description |
|---|---|---|---|
| >AI Event F1 | | | Event identifier of the first AI event |
| | >>CHOICE AI use case | | AI use case |
| | | >>>load balancing | Load balancing |
| | | >>>mobility enhancements | Mobility optimization |
| | | >>>energy saving | Network energy saving |
| | >>Time to trigger | | Time to trigger |

It should be noted that after the first network device sends, to the second network device, the AI data request that carries the event identifier and the configuration parameter of the first AI event, the second network device may correspondingly store the event identifier and the configuration parameter of the first AI event that are received, to implement configuration of the event information of the first AI event. Then, the second network device may send an AI data response to the first network device, where the AI data response carries first indication information, and the first indication information indicates that the second network device successfully configures or fails to configure the event information of the first AI event. When indicating that the configuration fails, the first indication information may further indicate a configuration failure cause.

It may be understood that the examples in Table 1 to Table 6 are merely possible implementations of an information element structure used when the event information of the first AI event is transmitted by using the AI data request, and do not constitute any limitation on a transmission manner or the information element structure of the event information of the first AI event.

Optionally, when storing the event identifier and the configuration parameter of the first AI event, the second network device may correspondingly store the event identifier and the configuration parameter of the first AI event and a device identifier of the first network device, to distinguish between different AI events configured by different network devices.

In another possible implementation, the event information of the first AI event in the AI data request may include an event identifier of the first AI event, but does not include a configuration parameter of the first AI event.

In this case, before sending the AI data request to the second network device, the first network device may further send an AI event information set to the second network device, to indicate the second network device to store the AI event information set, where the AI event information set includes an event identifier and a configuration parameter of at least one AI event, and the at least one AI event includes the event identifier of the first AI event.

For example, the first network device may include the AI event information set by using an AI event configuration request. The AI event configuration request may be a request dedicated to transmitting the AI event information set. Alternatively, the AI event configuration request may reuse another request between the first network device and the second network device. For example, the AI event configuration request may be an Xn link setup request (Xn setup request), in other words, the first network device may include the AI event information set in the Xn link setup request sent to the second network device. For an implementation of the event identifier and the configuration parameter of the at least one AI event in the AI event information set, refer to the foregoing related descriptions. Details are not described herein again in this embodiment of this application.

After receiving the AI event information set, the second network device may correspondingly store event identifiers and configuration parameters of all AI events in the AI event information set, to complete configuration of event information of the AI events. Then, the second network device may send second indication information to the first network device, where the second indication information indicates that the second network device successfully configures or fails to configure event information of some or all of the AI events in the AI event information set. Optionally, when there is an AI event that fails to be configured, the second indication information may further indicate a configuration failure cause.

For example, when the first network device uses the AI event configuration request to carry the AI event information set, the second network device may send an AI event configuration response to the first network device, where the AI event configuration response carries the second indication information.

When the AI event configuration request is the request dedicated to transmitting the AI event information set, the AI event configuration response is also a response dedicated to the AI event configuration request. When the AI event configuration request reuses the another request between the first network device and the second network device, the AI event configuration response is a response to the corresponding request. For example, when the AI event configuration request is an Xn link setup request, the AI event configuration response may be an Xn link setup response (Xn setup response).

Optionally, when storing the AI event information set, the second network device may correspondingly store the device identifier of the first network device and the AI event information set, to distinguish between AI event information sets from different network devices.

Optionally, when sending the AI data request to the second network device, the first network device may further send third indication information to the second network device, where the third indication information indicates an AI data item requested by the first network device. The AI data item requested by the first network device may include one or more of the predicted value of the measurement item, the current measurement value, and other related data that are included in the first AI event, or may include other data of the second network device. This is not limited in this embodiment of this application.

It should be noted that the AI data item requested by the first network device may be associated with an AI use case executed by the first network device. For example, when the first network device performs AI model-based load balancing, the AI data item requested by the first network device may be AI data, related to device load, predicted or currently measured by the second network device.

In addition, the third indication information may be carried by using another message different from the AI data request, or may be carried by using the AI data request. In addition, sending occasions of the third indication information and the AI data request may be in any sequence.

In addition, the AI data request may be a message dedicated to requesting the AI data, or may reuse another request between the first network device and the second network device. For example, the AI data request may be a handover request sent by the first network device to the second network device. The first network device may include the event information of the first AI event in the handover request sent to the second network device.

Step 402: The second network device sends the AI data to the first network device based on the event information of the first AI event.

After receiving the AI data request sent by the first network device, the second network device may send the AI data to the first network device based on the event information, of the first AI event, carried in the AI data request.

In a possible implementation, when the event information, of the first AI event, carried in the AI data request is the event identifier and the configuration parameter of the first AI event, the second network device may send the AI data to the first network device based on the event identifier and the configuration parameter of the first AI event.

It can be learned from the foregoing descriptions that, when the first AI event includes the prediction-type trigger event or the current measurement-type trigger event, the configuration parameter of the first AI event includes the measurement item and/or the specified threshold corresponding to the measurement item, and the configuration parameter of the first AI event further includes the time to trigger. In this case, after receiving the event identifier and the configuration parameter of the first AI event, the second network device may detect the first AI event based on the event identifier of the first AI event, the indication information of the measurement item, and/or the specified threshold corresponding to the measurement item, and send the AI data to the first network device when the first AI event is continuously detected within the time to trigger.

In an example, when the first AI event includes that the predicted value of the first measurement item in the prediction-type trigger event is greater than the corresponding first specified threshold, the second network device may detect, based on the event identifier of the first AI event, whether the predicted value of the first measurement item is greater than the corresponding first specified threshold, and send the AI data to the first network device if detecting that the predicted value of the first measurement item is greater than the first specified threshold and the predicted value of the first measurement item is continuously greater than the first specified threshold within the time to trigger. The predicted value of the first measurement item is a value obtained by the second network device through prediction by using the AI model.

Optionally, if the configuration parameter of the first AI event further includes a hysteresis parameter and prediction accuracy, the second network device may detect, based on the event identifier of the first AI event, whether the predicted value of the first measurement item satisfies the prediction accuracy. When the predicted value satisfies the prediction accuracy, the second network device detects, based on the hysteresis parameter and the first specified threshold corresponding to the first measurement item, whether the predicted value of the first measurement item is within a hysteresis range, and sends the AI data to the first network device if detecting that the predicted value of the first measurement item is continuously within the hysteresis range within the time to trigger.

The second network device may return all of the AI data of the second network device to the first network device. Alternatively, if the first network device sends, to the second network device, third indication information indicating a data item requested by the first network device, the second network device may return corresponding AI data based on the third indication information.

For example, when the first AI event includes that the predicted value of the device load is greater than the corresponding first load threshold, and the configuration parameter of the AI event is shown in step 401, the second network device may return the AI data to the first network device under an indication of the second indication information when detecting that one or more predicted values of a throughput, PRB usage, a number of active terminals, a number of RRC connections, a composite available capacity group, a TNL capacity indicator, and a slice available capacity satisfy prediction accuracy and are within corresponding hysteresis ranges within the time to trigger. For example, when the first network device performs AI model-based load balancing, the second network device may return, under the indication of the third indication information, predicted values that are of the foregoing load sub-items and that are obtained through prediction at a current moment, or current measurement values of the foregoing load sub-items, so that the first network device may perform AI model training, inference, or optimization based on the AI data.

In another example, when the first AI event includes that the current measurement value of the second measurement item is different from the predicted value before the current moment, the second network device may compare, based on the event identifier of the first AI event, whether the current measurement value of the second measurement item is the same as the predicted value before the current moment, and return the AI data to the first network device if the current measurement value of the second measurement item is inconsistent with the predicted value before the current moment within the time to trigger. For an implementation of returning the AI data to the first network device, refer to the foregoing examples.

For example, when the first AI event includes that the current measurement value of the terminal service is different from the predicted value before the current moment, and the configuration parameter of the AI event is shown in step 401, the second network device may detect whether a current measurement value of a service of a terminal identified by at least one terminal identifier in the terminal identifier list is consistent with a predicted value before a current moment, in other words, detect whether a service of at least one terminal at the current moment is consistent with a predicted service of the at least one terminal before the current moment. If the second network device detects, within the time to trigger, that the two are always inconsistent, the second network device may return AI data associated with the at least one terminal to the first network device. For example, the AI data may include a type of a service currently executed by the terminal, a throughput, a packet loss rate, a transmission latency, and the like.

In another example, when the first AI event includes the current action-type trigger event, for example, when the first AI event includes that the cell is enabled, and the configuration parameter of the first AI event includes a cell identifier list and time to trigger, the second network device may detect an enabled/disabled state of a target cell based on the event identifier of the first AI event, where a cell identifier of the target cell is any cell identifier in the cell identifier list; and send the AI data to the first network device when detecting that the target cell is in the enabled state within the duration. The AI data may be data that is related to the target cell and that is measured by the second network device, and the AI data may be used by the first network device to implement AI model-based network energy saving.

For another example, when the first AI event includes that the terminal is successfully handed over, and the configuration parameter of the AI event includes a terminal identifier list and time to trigger, the second network device may detect a camped state of a target terminal based on the event identifier of the first AI event, where an identifier of the target terminal is any identifier in the terminal identifier list, and the target terminal is a terminal handed over to the second network device; and send the AI data to the first network device when detecting that the target terminal continuously camps on the second network device within the time to trigger. The AI data may be data associated with the target terminal, for example, a handover parameter of the target terminal. In addition, the AI data may be used by the first network device to implement AI model-based mobility optimization.

For another example, when the first AI event includes that the AI use case is executed, and the configuration parameter of the AI event includes the AI use case and the time to trigger described in step 401, the second network device may detect, based on the event identifier of the first AI event, a status of executing the AI use case by the second network device; and send the AI data to the first network device when detecting that the second network device executes any one of the foregoing AI use cases within the time to trigger. The AI data may be data related to the AI use case executed by the second network device. For example, if the second network device performs load balancing within the time to trigger, the second network device may return data related to the load balancing to the first network device, for example, values that are of different load sub-items and that are predicted or currently measured by the second network device.

In another possible implementation, when the event information, of the first AI event, carried in the AI data request includes the event identifier of the first AI event, the second network device may obtain the configuration parameter of the first AI event based on the event identifier of the first AI event, and then, send the AI data to the first network device based on the event identifier and the configuration parameter of the first AI event.

When the AI data request carries the event identifier of the first AI event but does not carry the configuration parameter, the first network device pre-sends an AI event information set including the event identifier and the configuration parameter of the first AI event to the second network device, to indicate the second network device to store the AI event information set. Based on this, after receiving the AI data request, the second network device may search the stored AI event information set for and obtain the configuration parameter of the first AI event based on the event identifier of the first AI event.

After obtaining the configuration parameter of the first AI event, the second network device may send the AI data to the first network device based on the event identifier and the configuration parameter of the first AI event. For a related implementation, refer to related descriptions in step 402.

Optionally, in this implementation, the first network device pre-sends the AI event information set to the second network device to configure an AI event. Subsequently, the first network device may further update a configuration parameter of the preconfigured AI event in the AI event information set.

For example, the first network device may send a configuration update request to the second network device, where the configuration update request includes the event identifier and update information of the first AI event, and the configuration update request is used to request the second network device to update the configuration parameter of the first AI event. After receiving the configuration update request, the second network device updates the configuration parameter of the first AI event based on the event identifier and the update information that are of the first AI event and that are carried in the configuration update request. Then, the second network device sends a configuration update response to the first network device, where the configuration update response indicates that the configuration parameter of the first AI event is successfully updated or fails to be updated. When the configuration parameter of the first AI event fails to be updated, the configuration update response may further indicate an update failure cause.

The update information carried in the configuration update request may include at least one configuration parameter and an update operation corresponding to each of the at least one configuration parameter, and the update operation includes any one of modification, addition, and deletion.

Correspondingly, the second network device may search, based on the event identifier of the first AI event, for a configuration parameter of the first AI event stored in the second network device, and then perform, based on the configuration parameter carried in the update information and the corresponding update operation, a corresponding update operation on the configuration parameter that is of the first AI event and that is stored in the second network device.

For example, when the first AI event is that the predicted value of the device load is greater than the corresponding first specified threshold, and the first network device intends to modify a throughput threshold in the configuration parameter of the first AI event, information carried in the configuration update request may be an example in Table 7.

**Table 7 Information in the configuration update request**

| Information element name | | | Information element description |
|---|---|---|---|
| >AI event cfg to update list | | | The update operation is modification. |
| | >>AI event A1 | | Event identifier of the first AI event |
| | | >>>Threshold throughput | Throughput threshold |

The throughput threshold shown in Table 7 is a modified throughput threshold determined by the first network device. After receiving the configuration update request, the second network device may modify a throughput threshold stored in the second network device to the throughput threshold in Table 7.

For another example, when the first AI event is that the predicted value of the device load is greater than the corresponding first specified threshold, the configuration parameter of the first AI event stored in the second network device does not include a threshold of a number of active terminals. In addition, the first network device intends to add the threshold of a number of active terminals to the configuration parameter of the first AI event. In this case, information carried in the configuration update request may be an example in Table 8.

**Table 8 Information in the configuration update request**

| Information element name | | | Information element description |
|---|---|---|---|
| >AI event cfg to add list | | | The update operation is addition. |
| | >>AI event A1 | | Event identifier of the first AI event |
| | | >>>Threshold number of active UEs | Threshold of a number of active terminals |

The threshold of a number of active terminals in Table 8 is a threshold item to be added by the first network device. In this case, the second network device may add, to the configuration parameter of the first AI event stored in the second network device, the threshold of a number of active terminals carried in the configuration update request.

For another example, when the first AI event is that the predicted value of the device load is greater than the corresponding first specified threshold, and the first network device intends to delete a threshold of a number of RRC connections in the configuration parameter of the first AI event stored in the second network device, information carried in the configuration update request may be an example in Table 9.

**Table 9 Information in the configuration update request**

| Information element name | | | Information element description |
|---|---|---|---|
| >AI event cfg to remove list | | | The update operation is deletion. |
| | >>AI event A1 | | Event identifier of the first AI event |
| | | >>>Threshold number of RRC connections | Threshold of a number of RRC connections |

The threshold of a number of RRC connections in Table 9 is a threshold item to be deleted by the first network device. In this case, the second network device may delete the threshold of a number of RRC connections in the configuration parameter of the first AI event stored in the second network device.

For example, the configuration update request may further carry a device identifier of the first network device, to indicate the second network device to update the configuration parameter of the first AI event pre-sent by the first network device.

It may be understood that the examples in Table 7 to Table 9 are merely possible implementations of an information element structure used when the update information of the first AI event is transmitted by using the configuration update request, and do not constitute any limitation on a transmission manner or the information element structure of the update information of the first AI event.

It should be noted that the configuration update request and the configuration update response may be signaling dedicated to updating the configuration parameter of the AI event. Optionally, the configuration update request and the configuration update response may alternatively reuse another request and a corresponding response between the first network device and the second network device. For example, the configuration update request may be an Xn link setup request, and the configuration update response is an Xn link setup response. Alternatively, the configuration update request may be a handover request, and the configuration update response may be a handover request response.

The foregoing uses updating the configuration parameter of the first AI event as an example for description. Apparently, the first network device may further update, by including an event identifier of another AI event and corresponding update information in the configuration update request, a configuration parameter of a corresponding AI event preconfigured in the second network device. Details are not described again.

It should be noted that when the AI data request directly carries the event identifier and the configuration parameter of the first AI event, the configuration parameter of the AI event on the second network device may also be updated by using the method described above. For example, after receiving the AI data returned by the second network device based on the AI data request, the first network device may also send a configuration update request to the second network device, to update a configuration parameter of an AI event that is previously sent by the first network device to the second network device. Details are not described again.

According to the data transmission method provided in this application, when sending the AI data request to the second network device, the first network device may include the event information of the first AI event in the AI data request, where the first AI event is an event that triggers the second network device to send the AI data. In this way, the second network device can send the AI data to the first network device based on the event information of the first AI event when detecting that the first AI event is satisfied. The second network device can return, in a timely manner when triggered by a trigger event specified by the first network device, AI data needed by the first network device, so that diversified data requirements of the first network device are satisfied, and effect of training, inferring, or optimizing an AI model by the first network device can be improved.

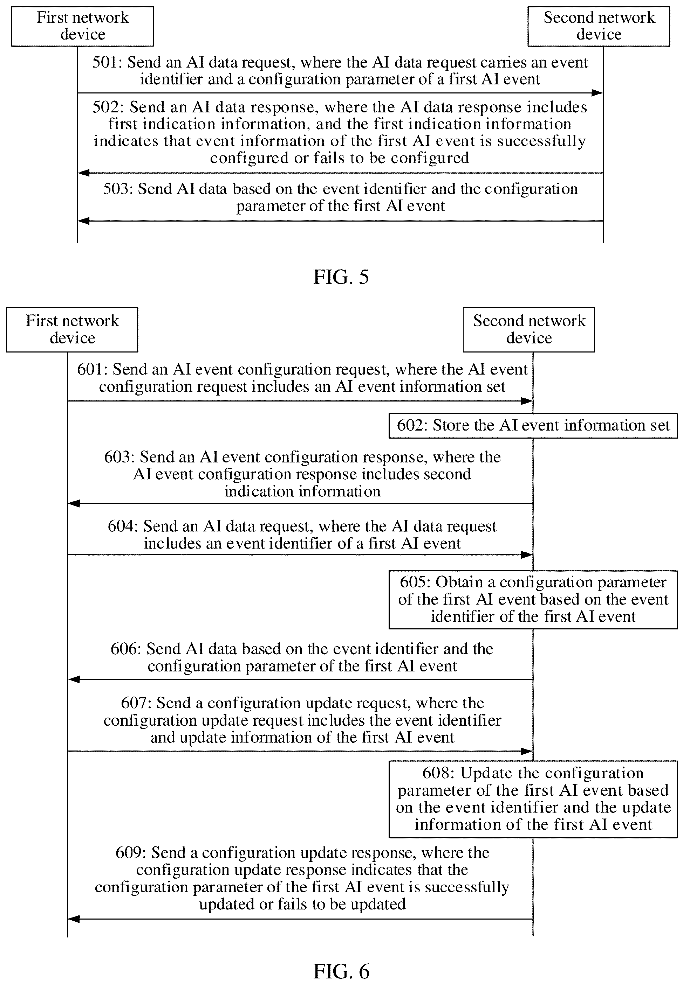

Based on the foregoing descriptions, when the AI data request carries the event identifier and the configuration parameter of the first AI event, in an example, as shown in FIG. 5, the data transmission method may include the following steps.

Step 501: A first network device sends an AI data request to a second network device, where the AI data request includes an event identifier and a configuration parameter of a first AI event.

Step 502: The second network device sends an AI data response to the first network device, where the AI data response includes first indication information, and the first indication information indicates that the second network device successfully configures or fails to configure event information of the first AI event.

Step 503: The second network device sends AI data to the first network device based on the event identifier and the configuration parameter of the first AI event.

For implementations of step 501 to step 503, refer to implementations of related steps in the embodiment shown in FIG. 4. Details are not described again.

When the data transmission method shown in FIG. 5 is used, the first network device may directly include the event identifier and the configuration parameter of the first AI event in the AI data request. In this way, both configuration of event information of an AI event and a request for the AI data can be implemented, thereby reducing signaling overheads between network devices.

When the AI data request carries the event identifier of the first AI event but does not carry the configuration parameter of the first AI event, in an example, as shown in FIG. 6, the data transmission method may include the following steps.

Step 601: A first network device sends an AI event configuration request to a second network device, where the AI event configuration request includes an AI event information set.

Step 602: The second network device stores the AI event information set.

Step 603: The second network device sends an AI event configuration response to the first network device, where the AI event configuration response includes second indication information, and the second indication information indicates that stored event information of an AI event is successfully configured or fails to be configured.

Step 604: The first network device sends an AI data request to the second network device, where the AI data request includes an event identifier of a first AI event.

Step 605: The second network device obtains a configuration parameter of the first AI event based on the event identifier of the first AI event.

Step 606: The second network device sends AI data to the first network device based on the event identifier and the configuration parameter of the first AI event.

Step 607: The first network device sends a configuration update request to the second network device, where the configuration update request includes the event identifier and update information of the first AI event.

Step 608: The second network device updates the configuration parameter of the first AI event based on the event identifier and the update information of the first AI event.

Step 609: The second network device sends a configuration update response to the first network device, where the configuration update response indicates that the configuration parameter of the first AI event is successfully updated or fails to be updated.

For implementations of step 601 to step 609, refer to related descriptions in the embodiment shown in FIG. 4. Details are not described again.

When the data transmission method provided in FIG. 6 is used, the first network device may preconfigure the event information of the AI event in the second network device through step 601 to step 603. Subsequently, when needing to obtain the AI data, the first network device may include an event identifier of the AI event in the AI data request, to indicate the second network device to return the AI data when the corresponding AI event is satisfied, thereby reducing signaling overheads.

In addition, the first network device and the second network device may update, through step 607 to step 609, the configuration parameter, of the AI event, preconfigured by the first network device in the second network device, to reduce incorrect or unnecessary data transmission caused by a change of the configuration parameter of the AI event.

The following describes the data transmission apparatus provided in embodiments of this application.

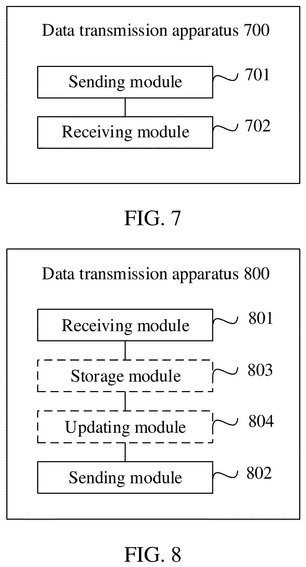

FIG. 7 is a diagram of a structure of a data transmission apparatus 700 according to an embodiment of this application. The apparatus may be deployed in the first network device in the foregoing embodiments. As shown in FIG. 7, the data transmission apparatus includes a sending module 701 and a receiving module 702.

The sending module 701 is configured to perform step 401 in the foregoing embodiments. In some examples, the sending module is configured to perform step 501 or step 604 in the foregoing embodiments.

The receiving module 702 is configured to receive AI data returned by a second network device.

For example, event information of a first AI event includes an event identifier and a configuration parameter of the first AI event.

For example, event information of a first AI event includes an event identifier of the first AI event.

For example, the sending module 701 is further configured to:
send an AI event information set to the second network device, to indicate the second network device to store the AI event information set, where the AI event information set includes a configuration parameter and an event identifier of at least one AI event, and the at least one AI event includes the first AI event.

For example, the sending module 701 is further configured to send a configuration update request to the second network device, where the configuration update request includes the event identifier and update information of the first AI event, and the configuration update request is used to request the second network device to update the configuration parameter of the first AI event; and the receiving module 702 is further configured to receive a configuration update response sent by the second network device for the configuration update request, where the configuration update response indicates that the second network device successfully updates or fails to update the configuration parameter of the first AI event.

For example, the update information includes at least one configuration parameter and an update operation corresponding to each of the at least one configuration parameter, and the update operation includes one of modification, addition, and deletion.

For example, the first AI event includes a prediction-type trigger event, and the prediction-type trigger event includes a trigger event based on an AI model prediction result of the second network device.

For example, the prediction-type trigger event includes at least one of the following: A predicted value of a first measurement item is greater than a corresponding first specified threshold, and the predicted value of the first measurement item is less than a corresponding second specified threshold, where the first specified threshold is greater than the second specified threshold.

For example, the first AI event includes a current measurement-type trigger event, and the current measurement-type trigger event includes a trigger event based on a current measurement result of the second network device.

For example, the current measurement-type trigger event includes at least one of the following: A current measurement value of a first measurement item is greater than a corresponding third specified threshold, the current measurement value of the first measurement item is less than a corresponding fourth specified threshold, a current measurement value of a second measurement item is different from a predicted value before a current moment, an error rate between a current measurement value of a third measurement item and a predicted value before a current moment is greater than a corresponding fifth specified threshold, and the error rate between the current measurement value of the third measurement item and the predicted value before the current moment is less than a corresponding sixth specified threshold, where the third specified threshold is greater than the fourth specified threshold, and the fifth specified threshold is greater than the sixth specified threshold.

For example, the first measurement item includes any one of device load, device energy consumption, and terminal traffic, the second measurement item includes a terminal movement path or a terminal service, and the third measurement item includes any one of device load, device energy consumption, and terminal traffic.

For example, when the first AI event includes the prediction-type trigger event or the current measurement-type trigger event, the configuration parameter of the first AI event includes indication information of a measurement item and/or a specified threshold corresponding to the measurement item, and the configuration parameter of the first AI event further includes duration of the first AI event.

For example, the first AI event includes a current action-type trigger event, and the current action-type trigger event includes a trigger event based on a current action of the second network device.

For example, the current action-type trigger event includes at least one of the following: A cell is enabled, a terminal is successfully handed over, a terminal is being handed over, and an AI use case is executed.

For example, when the first AI event includes that the cell is enabled, the configuration parameter of the first AI event includes a cell identifier list and duration of the first AI event; when the first AI event includes at least one of the following: The terminal is successfully handed over and the terminal is being handed over, the configuration parameter of the first AI event includes a terminal identifier list and the duration; and when the first AI event includes that the AI use case is executed, the configuration parameter of the first AI event includes an AI use case and the duration.

According to the data transmission apparatus provided in this application, when sending an AI data request to the second network device, the first network device may include the event information of the first AI event in the AI data request, where the first AI event is an event that triggers the second network device to send the AI data. In this way, the second network device can send the AI data to the first network device based on the event information of the first AI event when detecting that the first AI event is satisfied. The second network device can return, in a timely manner when triggered by a trigger event specified by the first network device, AI data needed by the first network device, so that diversified data requirements of the first network device are satisfied, and effect of training, inferring, or optimizing an AI model by the first network device can be improved.

FIG. 8 is a diagram of a structure of another data transmission apparatus according to an embodiment of this application. The data transmission apparatus may be deployed in the second network device in the foregoing embodiments. As shown in FIG. 8, the data transmission apparatus 800 includes a receiving module 801 and a sending module 802.

The receiving module 801 is configured to receive an AI data request sent by a first network device, where the AI data request includes event information of a first AI event, and the first AI event is used to trigger the second network device to send AI data to the first network device.

The sending module 802 is configured to perform step 402 in the foregoing embodiments.

In some examples, the sending module 802 is configured to perform step 502 and step 503 in the foregoing embodiments.

In some other examples, the sending module 802 is configured to perform step 605 and step 606 in the foregoing embodiments.

In this case, refer to FIG. 8. The apparatus 800 may further include a storage module 803. The sending module 802 is further configured to receive an AI event information set sent by the first network device, where the AI event information set includes a configuration parameter and an event identifier of at least one AI event, and the at least one AI event includes the first AI event. The storage module 803 is configured to store the AI event information set.

For example, refer to FIG. 8. The apparatus 800 may further include an updating module 804. The receiving module 801 is further configured to receive a configuration update request sent by the first network device, where the configuration update request includes an event identifier and update information of the first AI event; the updating module 804 is configured to update a configuration parameter of the first AI event based on the event identifier and the update information of the first AI event; and the sending module 802 is further configured to send a configuration update response to the first network device, where the configuration update response indicates that the configuration parameter of the first AI event is successfully updated or fails to be updated.

For example, the update information includes at least one configuration parameter and an update operation corresponding to each of the at least one configuration parameter, and the update operation includes one of modification, addition, and deletion.

For example, the first AI event includes a prediction-type trigger event, and the prediction-type trigger event includes a trigger event based on an AI model prediction result of the second network device.

For example, the prediction-type trigger event includes at least one of the following: A predicted value of a first measurement item is greater than a corresponding first specified threshold, and the predicted value of the first measurement item is less than a corresponding second specified threshold, where the first specified threshold is greater than the second specified threshold.

For example, the first AI event includes a current measurement-type trigger event, and the current measurement-type trigger event includes a trigger event based on a current measurement result of the second network device.

For example, the current measurement-type trigger event includes at least one of the following: A current measurement value of a first measurement item is greater than a corresponding third specified threshold, the current measurement value of the first measurement item is less than a corresponding fourth specified threshold, a current measurement value of a second measurement item is different from a predicted value before a current moment, an error rate between a current measurement value of a third measurement item and a predicted value before a current moment is greater than a corresponding fifth specified threshold, and the error rate between the current measurement value of the third measurement item and the predicted value before the current moment is less than a corresponding sixth specified threshold, where the third specified threshold is greater than the fourth specified threshold, and the fifth specified threshold is greater than the sixth specified threshold.

For example, the first measurement item includes any one of device load, device energy consumption, and terminal traffic, the second measurement item includes a terminal movement path or a terminal service, and the third measurement item includes any one of device load, device energy consumption, and terminal traffic.

For example, when the first AI event includes the prediction-type trigger event or the current measurement-type trigger event, the configuration parameter of the first AI event includes indication information of a measurement item and/or a specified threshold corresponding to the measurement item, and the configuration parameter of the first AI event further includes duration of the first AI event.

In this case, the sending module 802 is mainly configured to: detect the first AI event based on the event identifier of the first AI event, the indication information of the measurement item, and/or the specified threshold corresponding to the measurement item; and send the AI data to the first network device when the first AI event is continuously detected within the duration.

For example, the first AI event includes a current action-type trigger event, and the current action-type trigger event includes a trigger event based on a current action of the second network device.

For example, the current action-type trigger event includes at least one of the following: A cell is enabled, a terminal is successfully handed over, a terminal is being handed over, and an AI use case is executed.

For example, when the first AI event includes that the cell is enabled, the configuration parameter of the first AI event includes a cell identifier list and the duration of the first AI event. In this case, the sending module 802 is mainly configured to: detect an enabled/disabled state of a target cell based on the event identifier of the first AI event, where a cell identifier of the target cell is any cell identifier in the cell identifier list; and send the AI data to the first network device when it is detected that the target cell is in the enabled state within the duration.

For example, when the first AI event includes that the terminal is successfully handed over, the configuration parameter of the first AI event includes a terminal identifier list and the duration of the first AI event. In this case, the sending module 802 is mainly configured to: detect a camped state of a target terminal based on the event identifier of the first AI event, where an identifier of the target terminal is any identifier in the terminal identifier list, and the target terminal is a terminal handed over to the second network device; and send the AI data to the first network device when it is detected that the target terminal continuously camps on the second network device within the duration.

For example, when the first AI event includes that the AI use case is executed, the configuration parameter of the first AI event includes the AI use case and duration of the first AI event. In this case, the sending module 802 is mainly configured to: detect, based on the event identifier of the first AI event, a status of executing the AI use case by the second network device; and send the AI data to the first network device when it is detected that the second network device executes the AI use case within the duration.

According to the data transmission apparatus provided in this application, the second network device receives the AI data request sent by the first network device, where the AI data request carries the event information of the first AI event. The second network device can send the AI data to the first network device based on the event information of the first AI event when detecting that the first AI event is satisfied. The second network device can return, in a timely manner when triggered by a trigger event specified by the first network device, AI data needed by the first network device, so that diversified data requirements of the first network device are satisfied, and effect of training, inferring, or optimizing an AI model by the first network device can be improved.

It should be noted that module division in various data transmission apparatuses in the foregoing embodiments is an example, and is merely logical function division. During actual implementation, there may be another division manner. In addition, functional modules in embodiments of this application may be integrated into one processor, each of the modules may exist alone physically, or two or more modules may be integrated into one module. The integrated module may be implemented in a form of hardware, or may be implemented in a form of a software functional module.

If the integrated module is implemented in a form of a software functional module and is sold or used as an independent product, the integrated module may be stored in a computer-readable storage medium. Based on such an understanding, the technical solutions of embodiments of this application essentially, or the part contributing to the conventional technology, or all or a part of the technical solutions may be implemented in a form of a software product. The computer software product is stored in a storage medium and includes several instructions for instructing a network device (which may be a router or a switch) or a processor (processor) to perform all or some of the steps of the method described in the embodiments of this application. The foregoing storage medium includes various media that can store program code. For example, the storage medium may be a computer-readable storage medium, any usable medium accessible by a computer, or a data storage device, such as a server or a data center, integrating one or more usable media. The usable medium may be a magnetic medium (for example, a floppy disk, a hard disk drive, or a tape), an optical medium (for example, a digital versatile disc (digital versatile disc, DVD)), or a semi-conductive medium (for example, a solid-state drive (solid-state drive, SSD)). For another example, the storage medium may be a read-only memory (read-only memory, ROM) or a random access memory (random access memory, RAM). In addition, the data transmission apparatus and the data transmission method embodiments that are provided in the foregoing embodiments are based on a same idea. For a specific implementation process of the apparatus, refer to the method embodiments. Details are not described herein again.

An embodiment of this application further provides a data transmission system. The data transmission system includes a first network device and a second network device. The first network device may be configured to perform the steps performed by the first network device in the method embodiment shown in FIG. 4, FIG. 5, or FIG. 6. The second network device may be configured to perform the steps performed by the second network device in the method embodiment shown in FIG. 4, FIG. 5, or FIG. 6. Details are not described again.

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, a digital subscriber line (digital subscriber line, DSL)) or wireless (for example, infrared, radio, or microwave) manner.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" generally represents an "or" relationship between associated objects. In this application, "first", "second", and various numbers are used for differentiation for ease of description, and are not used to limit the scope of embodiments of this application, for example, are intended to distinguish between different messages but not to describe a specific order or sequence.

It may be understood that the various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A data transmission method, wherein the method is applied to a first network device, and the method comprises:
sending an AI data request to a second network device, wherein the AI data request comprises event information of a first AI event, and the first AI event is used to trigger the second network device to send AI data to the first network device; and
receiving the AI data.

2. The method according to claim 1, wherein the event information of the first AI event comprises an event identifier and a configuration parameter of the first AI event.

3. The method according to claim 1, wherein the event information of the first AI event comprises an event identifier of the first AI event.

4. The method according to claim 3, wherein before sending the AI data request to the second network device, the method further comprises:
sending an AI event information set to the second network device, to indicate the second network device to store the AI event information set, wherein the AI event information set comprises a configuration parameter and an event identifier of at least one AI event, and the at least one AI event comprises the first AI event.

5. The method according to any one of claims 1 to 4, wherein the method further comprises:
sending a configuration update request to the second network device, wherein the configuration update request comprises the event identifier and update information of the first AI event, and the configuration update request is used to request the second network device to update the configuration parameter of the first AI event; and
receiving a configuration update response sent by the second network device for the configuration update request, wherein the configuration update response indicates that the second network device successfully updates or fails to update the configuration parameter of the first AI event.

6. The method according to claim 5, wherein the update information comprises at least one configuration parameter and an update operation corresponding to each of the at least one configuration parameter, and the update operation comprises one of modification, addition, and deletion.

7. The method according to any one of claims 2 and 4 to 6, wherein the first AI event comprises a prediction-type trigger event, and the prediction-type trigger event comprises a trigger event based on an AI model prediction result of the second network device.

8. The method according to claim 7, wherein the prediction-type trigger event comprises at least one of the following: a predicted value of a first measurement item is greater than a corresponding first specified threshold, and the predicted value of the first measurement item is less than a corresponding second specified threshold, wherein the first specified threshold is greater than the second specified threshold.

9. The method according to any one of claims 2 and 4 to 6, wherein the first AI event comprises a current measurement-type trigger event, and the current measurement-type trigger event comprises a trigger event based on a current measurement result of the second network device.

10. The method according to claim 9, wherein the current measurement-type trigger event comprises at least one of the following: a current measurement value of a first measurement item is greater than a corresponding third specified threshold, the current measurement value of the first measurement item is less than a corresponding fourth specified threshold, a current measurement value of a second measurement item is different from a predicted value before a current moment, an error rate between a current measurement value of a third measurement item and a predicted value before a current moment is greater than a corresponding fifth specified threshold, and the error rate between the current measurement value of the third measurement item and the predicted value before the current moment is less than a corresponding sixth specified threshold, wherein the third specified threshold is greater than the fourth specified threshold, and the fifth specified threshold is greater than the sixth specified threshold.

11. The method according to claim 10, wherein the first measurement item comprises any one of device load, device energy consumption, and terminal traffic, the second measurement item comprises a terminal movement path or a terminal service, and the third measurement item comprises any one of device load, device energy consumption, and terminal traffic.

12. The method according to any one of claims 8, 10, and 11, wherein when the first AI event comprises the prediction-type trigger event or the current measurement-type trigger event, the configuration parameter of the first AI event comprises indication information of a measurement item and/or a specified threshold corresponding to the measurement item, and the configuration parameter of the first AI event further comprises duration of the first AI event.

13. The method according to any one of claims 2 and 4 to 6, wherein the first AI event comprises a current action-type trigger event, and the current action-type trigger event comprises a trigger event based on a current action of the second network device.

14. The method according to claim 13, wherein the current action-type trigger event comprises at least one of the following: a cell is enabled, a terminal is successfully handed over, a terminal is being handed over, and an AI use case is executed.

15. The method according to claim 14, wherein
when the first AI event comprises that the cell is enabled, the configuration parameter of the first AI event comprises a cell identifier list and duration of the first AI event;
when the first AI event comprises at least one of the following: the terminal is successfully handed over and the terminal is being handed over, the configuration parameter of the first AI event comprises a terminal identifier list and duration; or
when the first AI event comprises that the AI use case is executed, the configuration parameter of the first AI event comprises the AI use case and duration.

16. A data transmission method, wherein the method is applied to a second network device, and the method comprises:
receiving an AI data request sent by a first network device, wherein the AI data request comprises event information of a first AI event, and the first AI event is used to trigger the second network device to send AI data to the first network device; and
sending the AI data to the first network device based on the event information of the first AI event.

17. The method according to claim 16, wherein the event information of the first AI event comprises an event identifier and a configuration parameter of the first AI event; and
sending, by the second network device, the AI data to the first network device based on the event information of the first AI event comprises:
sending, by the second network device, the AI data to the first network device based on the event identifier and the configuration parameter of the first AI event.

18. The method according to claim 16, wherein the event information of the first AI event comprises an event identifier of the first AI event; and
sending the AI data to the first network device based on the event information of the first AI event comprises:
obtaining a configuration parameter of the first AI event based on the event identifier of the first AI event; and
sending the AI data to the first network device based on the event identifier and the configuration parameter of the first AI event.

19. The method according to claim 18, wherein before receiving the AI data request sent by the first network device, the method further comprises:
receiving an AI event information set sent by the first network device, wherein the AI event information set comprises a configuration parameter and an event identifier of at least one AI event, and the at least one AI event comprises the first AI event; and
storing the AI event information set.

20. The method according to any one of claims 16 to 19, wherein the method further comprises:
receiving a configuration update request sent by the first network device, wherein the configuration update request comprises the event identifier and update information of the first AI event;
updating the configuration parameter of the first AI event based on the event identifier and the update information of the first AI event; and
sending a configuration update response to the first network device, wherein the configuration update response indicates that the configuration parameter of the first AI event is successfully updated or fails to be updated.

21. The method according to claim 20, wherein the update information comprises at least one configuration parameter and an update operation corresponding to each of the at least one configuration parameter, and the update operation comprises one of modification, addition, and deletion.

22. The method according to any one of claims 17 to 19, wherein the first AI event comprises a prediction-type trigger event, and the prediction-type trigger event comprises a trigger event based on an AI model prediction result of the second network device.

23. The method according to claim 22, wherein the prediction-type trigger event comprises at least one of the following: a predicted value of a first measurement item is greater than a corresponding first specified threshold, and the predicted value of the first measurement item is less than a corresponding second specified threshold, wherein the first specified threshold is greater than the second specified threshold.

24. The method according to any one of claims 17 to 19, wherein the first AI event comprises a current measurement-type trigger event, and the current measurement-type trigger event comprises a trigger event based on a current measurement result of the second network device.

25. The method according to claim 24, wherein the current measurement-type trigger event comprises at least one of the following: a current measurement value of a first measurement item is greater than a corresponding third specified threshold, the current measurement value of the first measurement item is less than a corresponding fourth specified threshold, a current measurement value of a second measurement item is different from a predicted value before a current moment, an error rate between a current measurement value of a third measurement item and a predicted value before a current moment is greater than a corresponding fifth specified threshold, and the error rate between the current measurement value of the third measurement item and the predicted value before the current moment is less than a corresponding sixth specified threshold, wherein the third specified threshold is greater than the fourth specified threshold, and the fifth specified threshold is greater than the sixth specified threshold.

26. The method according to claim 25, wherein the first measurement item comprises any one of device load, device energy consumption, and terminal traffic, the second measurement item comprises a terminal movement path or a terminal service, and the third measurement item comprises any one of device load, device energy consumption, and terminal traffic.

27. The method according to any one of claims 23, 25, and 26, wherein when the first AI event comprises the prediction-type trigger event or the current measurement-type trigger event, the configuration parameter of the first AI event comprises indication information of a measurement item and/or a specified threshold corresponding to the measurement item, and the configuration parameter of the first AI event further comprises duration of the first AI event.

28. The method according to claim 27, wherein sending the AI data to the first network device based on the event identifier and the configuration parameter of the first AI event comprises:
detecting the first AI event based on the event identifier of the first AI event, the indication information of the measurement item, and/or the specified threshold corresponding to the measurement item; and
sending the AI data to the first network device when the first AI event is continuously detected within the duration.

29. The method according to any one of claims 17 to 19, wherein the first AI event comprises a current action-type trigger event, and the current action-type trigger event comprises a trigger event based on a current action of the second network device.

30. The method according to claim 29, wherein the current action-type trigger event comprises at least one of the following: a cell is enabled, a terminal is successfully handed over, a terminal is being handed over, and an AI use case is executed.

31. The method according to claim 30, wherein when the first AI event comprises that the cell is enabled, the configuration parameter of the first AI event comprises a cell identifier list and duration of the first AI event; and
sending the AI data to the first network device based on the event identifier and the configuration parameter of the first AI event comprises:
detecting an enabled/disabled state of a target cell based on the event identifier of the first AI event, wherein a cell identifier of the target cell is any cell identifier in the cell identifier list; and
sending the AI data to the first network device when it is detected that the target cell is in the enabled state within the duration.

32. The method according to claim 30, wherein when the first AI event comprises that the terminal is successfully handed over, the configuration parameter of the first AI event comprises a terminal identifier list and duration of the first AI event; and
sending the AI data to the first network device based on the event identifier and the configuration parameter of the first AI event comprises:
detecting a camped state of a target terminal based on the event identifier of the first AI event, wherein an identifier of the target terminal is any identifier in the terminal identifier list, and the target terminal is a terminal handed over to the second network device; and
sending the AI data to the first network device when it is detected that the target terminal continuously camps on the second network device within the duration.

33. The method according to claim 30, wherein when the first AI event comprises that the AI use case is executed, the configuration parameter of the first AI event comprises the AI use case and duration of the first AI event; and
sending the AI data to the first network device based on the event identifier and the configuration parameter of the first AI event comprises:
detecting, based on the event identifier of the first AI event, a status of executing the AI use case by the second network device; and
sending the AI data to the first network device when it is detected that the second network device executes the AI use case within the duration.

34. A data transmission apparatus, wherein the data transmission apparatus comprises at least one module, and the at least one module is configured to perform the data transmission method according to any one of claims 1 to 16 or claims 17 to 33.

35. A data transmission apparatus, wherein the data transmission apparatus comprises a processor, and the processor is configured to execute at least one program instruction or code stored in a memory, to implement the data transmission method according to any one of claims 1 to 16 or claims 17 to 33.

36. A computer-readable storage medium, wherein the computer-readable storage medium stores instructions;
and when the instructions are run on a network device, the network device is enabled to perform the data transmission method according to any one of claims 1 to 16 or claims 17 to 33.
